(19) Europäisches Patentamt / European Patent Office / Office européen des brevets

(11) **EP 4 617 337 A1**

(12) **EUROPEAN PATENT APPLICATION**
published in accordance with Art. 153(4) EPC

(43) Date of publication:
**17.09.2025 Bulletin 2025/38**

(21) Application number: **23888770.7**

(22) Date of filing: **09.11.2023**

(51) International Patent Classification (IPC):
**C09J 7/38** (2018.01)          **C09J 11/08** (2006.01)
**C09J 133/04** (2006.01)

(52) Cooperative Patent Classification (CPC):
**C09J 7/38; C09J 11/08; C09J 133/04**

(86) International application number:
**PCT/JP2023/040417**

(87) International publication number:
**WO 2024/101425 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.11.2022 JP 2022181325**

(71) Applicant: **NITTO DENKO CORPORATION**
**Ibaraki-shi**
**Osaka 567-8680 (JP)**

(72) Inventors:
• **MORISHITA, Hiromitsu**
**Ibaraki-shi, Osaka 567-8680 (JP)**
• **SHIMOKAWA, Kayo**
**Ibaraki-shi, Osaka 567-8680 (JP)**
• **TSUKAMOTO, Narumi**
**Ibaraki-shi, Osaka 567-8680 (JP)**

(74) Representative: **Gill Jennings & Every LLP**
**The Broadgate Tower**
**20 Primrose Street**
**London EC2A 2ES (GB)**

(54) **THREADLIKE ADHESIVE BODY**

(57) According to the present invention, it is possible to provide a threadlike adhesive body that has small variation in thread width when made into a wound body and then unwound. The present invention relates to a threadlike adhesive body containing a core material and an adhesive that covers a surface of the core material in a longitudinal direction, and the adhesive has a storage elastic modulus exceeding $8.53 \times 10^4$ Pa at 0°C.

EP 4 617 337 A1

# EP 4 617 337 A1

**Description**

## TECHNICAL FIELD

The present invention relates to a threadlike adhesive body.

## BACKGROUND ART

A threadlike adhesive body containing a core material and an adhesive is generally made by coating a periphery of the core material with the adhesive, and is a thin adhesive body capable of conforming to a complex shape. When storing and transporting the threadlike adhesive body, the threadlike adhesive body can be made into a wound body by being wound into a cylindrical shape using a bobbin as necessary, and since no release liner is required, waste during a process can be reduced.

As the threadlike adhesive body, for example, Patent Literature 1 discloses a linear adhesive body having a small gel fraction change amount after aging. Patent Literature 2 discloses a threadlike adhesive body having a strong adhesive strength in which multifilament of four or more are used as a core material.

## CITATION LIST

## PATENT LITERATURE

Patent Literature 1: JP2020-19923A
Patent Literature 2: JP2020-76066A

## SUMMARY OF INVENTION

## TECHNICAL PROBLEM

When the threadlike adhesive body is made into a wound body, the threadlike adhesive body adheres to each other, so that when the threadlike adhesive body is unwound from the wound body, the adhesive stretches and is then cut. It causes a problem of uneven thickness of the adhesive and variation in thread width. In Patent Literatures 1 and 2, studies have not been sufficiently conducted on the problem of the variation in thread width.

The present invention has been made in consideration of the above-mentioned situation in the related art, and an object thereof is to provide a threadlike adhesive body that has small variation in thread width when made into a wound body and then unwound.

## SOLUTION TO PROBLEM

As a result of diligent study to solve the above-mentioned problem, inventors of the present invention found that the above-mentioned problem can be solved by adjusting a storage elastic modulus of an adhesive in a threadlike adhesive body containing a core material and the adhesive that covers a surface of the core material, thereby obtaining the present invention.

That is, the present invention relates to the following.

[1] A threadlike adhesive body, containing:

a core material; and
an adhesive that covers a surface of the core material in a longitudinal direction, in which
the adhesive has a storage elastic modulus exceeding $8.53 \times 10^4$ Pa at 0°C.

[2] A threadlike adhesive body, containing:

a core material; and
an adhesive that covers a surface of the core material in a longitudinal direction, in which
the adhesive has a storage elastic modulus exceeding $3.04 \times 10^4$ Pa at 23°C.

[3] The threadlike adhesive body according to [1] or [2], in which
the number of filaments contained in the core material is four or more.
[4] The threadlike adhesive body according to [1] or [2], in which

the adhesive contains an acrylic polymer, and
an amount of n-butyl acrylate or 2-ethylhexyl acrylate in the acrylic polymer is more than 50 mass% relative to a total amount of monomer components constituting the acrylic polymer.

[5] The threadlike adhesive body according to [1] or [2], in which

the adhesive contains an acrylic polymer, and
as a monomer component constituting the acrylic polymer, at least one selected from the group consisting of an alkyl(meth)acrylate having a linear alkyl group with 1 to 3 carbon atoms, an alkyl(meth)acrylate having a branched alkyl group with 3 or 4 carbon atoms, and an alicyclic monomer, is contained.

[6] The threadlike adhesive body according to [5], in which
an amount in total of at least one selected from the group consisting of the alkyl(meth)acrylate having a linear alkyl group with 1 to 3 carbon atoms, the alkyl(meth)acrylate having a branched alkyl group with 3 or 4 carbon atoms, and the alicyclic monomer is 1 mass% to 20 mass% relative to a total amount of monomer components constituting the acrylic polymer.
[7] The threadlike adhesive body according to [1] or [2], in which

the adhesive contains a base polymer and an adhesive-imparting resin, and
the adhesive-imparting resin is contained in an amount of 1 part by mass to 100 parts by mass relative to 100 parts by mass of the base polymer.

ADVANTAGEOUS EFFECTS OF INVENTION

According to the present invention, it is possible to provide a threadlike adhesive body that has small variation in thread width when made into a wound body and then unwound.

DESCRIPTION OF EMBODIMENTS

Hereinafter, an embodiment of a threadlike adhesive body of the present invention will be described in detail.
Note that the present invention is not limited to the embodiment to be described below. When an expression "to" is used in the present specification, it is used as an expression including numerical values or physical property values before and after it.
In the present specification, the threadlike adhesive body wound into a cylindrical shape, if necessary using a cylindrical body such as a bobbin, is referred to as a wound body. The wound body may or may not include the cylindrical body such as a bobbin.

[Threadlike Adhesive Body]

A threadlike adhesive body according to one embodiment of the present invention contains a core material and an adhesive that covers a surface of the core material in a longitudinal direction, and the adhesive has a storage elastic modulus exceeding $8.53 \times 10^4$ Pa at 0°C.
A threadlike adhesive body according to another embodiment of the present invention contains a core material and an adhesive that covers a surface of the core material in a longitudinal direction, and the adhesive has a storage elastic modulus exceeding $3.04 \times 10^4$ Pa at 23°C.
Here, the threadlike refers to a shape in which a length in a longitudinal direction is sufficiently longer than a length in a width direction, a ratio of a length of a long axis to a length of a short axis in a cross-sectional shape (long axis/short axis) is, for example, 200 or less, and the shape can be bent in various directions and at various angles like a thread.
The threadlike adhesive body according to the embodiment of the present invention can be bent in various directions and at various angles, and therefore can be bent to match a shape of a bonding area, and can respond to a variety of shapes of the bonding area.
The core material and the adhesive constituting the threadlike adhesive body according to the embodiment of the present invention will be described below.

<Core Material>

The threadlike adhesive body according to the embodiment of the present invention contains the core material. The core material is preferably in a form of a thread.

It is preferable that the core material is a multifilament yarn containing a plurality of filaments and formed by making the plurality of filaments into a composite yarn or a twisted yarn. When the core material is a multifilament yarn, sufficient strength and stable physical properties can be obtained. As a result, it is possible to obtain a threadlike adhesive body that has low variation in quality, excellent strength, and excellent adhesive strength.

From the viewpoint of adhesive strength, the number of filaments contained in the core material is preferably 4 or more, more preferably 10 or more, and particularly preferably 20 or more.

On the other hand, if a thickness (fineness) of the core material is kept at the same level, as the number of filaments increases, each filament becomes thinner (has a smaller fineness). If each filament becomes too thin, it may result in a decrease in the strength of the core material and a decrease in handleability, and therefore, the number of filaments is preferably 2000 or less, more preferably 1500 or less, and particularly preferably 1000 or less.

There is no particular limitation on a type of resin used for the filaments, and the type of resin may be appropriately selected depending on required properties such as strength, mass, and hardness. For example, materials including polymeric materials such as thermoplastic polymers, thermosetting polymers, and rubbers can be used.

Specifically, polymeric materials such as rayon, cupra, acetate, promix, nylon, aramid, vinylon, vinylidene, polyvinyl chloride, acrylic, polyolefin (polyethylene, polypropylene, ethylene-propylene copolymer, ethylene-vinyl acetate copolymer, and the like), polyester resin (polyethylene terephthalate, and the like), vinyl chloride resin, vinyl acetate resin, polyimide resin, polyamide resin, fluororesin, polyurethane, polyclar, and polylactic acid; rubbers such as synthetic rubber (natural rubber, polyurethane, and the like); foams such as polyurethane foam and polychloroprene rubber foam; and the like can be used. Among these, polyester resin is preferred, and polyethylene terephthalate is more preferred.

A content of the filaments in the core material is preferably 10 mass% to 100 mass%, more preferably 50 mass% to 100 mass%, and particularly preferably 80 mass% to 100 mass%, from the viewpoint of preventing or promoting impregnation of the core material with the adhesive.

The core material may contain various additives such as a filler (an inorganic filler, an organic filler or the like), an anti-aging agent, an antioxidant, an ultraviolet absorber, an antistatic agent, a lubricant, a plasticizer, and a colorant (a pigment, a dye, or the like) as necessary. The known or common surface treatment such as a corona discharge treatment, a plasma treatment or application of an undercoat agent may be performed on a surface of the core material.

A shape of the core material is not particularly limited, and may be appropriately adjusted depending on required properties such as strength, mass, and hardness.

A cross-sectional shape of the core material is typically circular, and may be various shapes such as an elliptical shape and a polygonal shape in addition to the circular shape.

The core material may contain a plurality of filaments, and may be a combined yarn obtained by twisting the filaments and spun yarns, finished yarns, hollow yarns, or the like together. Examples of the finished yarns include those have been subjected to crimping process or bulking processes and are generally called textured yarns, bulky yarns, and stretch yarns.

A thickness of the core material is not particularly limited, and may be appropriately adjusted so that the thickness of the threadlike adhesive body is appropriate depending on a use thereof.

The number of twists of the core material is preferably 1 twist/m or more. When the number of twists is 1 twist/m or more, it becomes easy to form voids as described below, and impact resistance of the threadlike adhesive body is improved. The number of twists of the core material is more preferably 20 twists/m or more, and still more preferably 50 twists/m or more.

On the other hand, in order to ensure that the core material is sufficiently deformed when a plurality of articles are bonded together, and in order to increase an adhered amount of the adhesive per unit length, it is preferable that the core material is not twisted too tightly. Therefore, the number of twists of the core material is preferably 500 twists/m or less, more preferably 300 twists/m or less, and still more preferably 100 twists/m or less.

When the core material is twisted, it is preferable to also control a twist coefficient K represented by the following Formula (A) from the same viewpoint as above. The twist coefficient K is an index for discussing an influence of twisting (influence on cohesion, ease of deformation, the adhered amount of the adhesive, and the like of the core material) regardless of the thickness of the core material. In other words, the influence of the number of twists on the core material varies depending on the thickness of the core material, but if the twist coefficient K is the same, the influence of twisting on the core material is the same regardless of the thickness of the core material.

The twist coefficient K is preferably 0 or more, and more preferably greater than 0. On the other hand, if the twist coefficient K is 200 or less, flexibility of the core material, and even the threadlike adhesive body, is improved, making it easier to be applied to curved portions, bent portions, uneven portions or other complicated shapes and narrow portions. Therefore, the twist coefficient K is preferably 200 or less, more preferably 100 or less, and still more preferably less than

50.

[Math. 1]

$$K = T/\sqrt{10000/D} \quad \cdots \quad (A)$$

In Formula (A), K is the twist coefficient, T is the number of twists (twists/m), and D is the fineness (dtex).

A content of the core material in the threadlike adhesive body is preferably 10 mass% or more, more preferably 20 mass% or more, and particularly preferably 30 mass% or more, from the viewpoint of preventing a decrease in strength of the threadlike adhesive body. The content of the core material in the threadlike adhesive body is preferably 90 mass% or less, more preferably 80 mass% or less, and particularly preferably 70 mass% or less, from the viewpoint of preventing the core material from coming out to the surface.

<Adhesive>

The threadlike adhesive body according to the embodiment of the present invention contains the adhesive that covers the core material. The adhesive in the present embodiment can be formed by an adhesive composition, and the adhesive may be the adhesive composition. The adhesive may form a layer (adhesive layer).

It is preferable that the adhesive covers an entire circumference of the surface of the core material in the longitudinal direction. The entire circumference of the surface of the core material refers to an entire peripheral surface of the core material, and means the entire 360° circumference of the surface of the core material, centered on a center line of the core material in the longitudinal direction.

However, an end surface of the core material may or may not be covered with the adhesive. For example, when the threadlike adhesive body is cut during production or during use, the end surface of the core material may not be covered with the adhesive.

By covering the entire circumference of the surface of the core material in the longitudinal direction with the adhesive, a threadlike adhesive body having excellent strength can be obtained. This is presumably because the core material is not exposed to the surface, thereby preventing stress from concentrating on one part of the core material and causing breakage.

A coverage of the core material with the adhesive (area(%) of the adhesive per unit area of the surface of the core material) is preferably 50 area% or more, more preferably 80 area% or more, still more preferably 90 area% or more, and particularly preferably 95 area% or more. When the coverage of the core material is 50 area% or more, breakage of the core material is prevented, and a threadlike adhesive body having excellent strength can be obtained.

The coverage of the core material can be calculated, for example, using an X-ray CT device (Xradia 520 Versa, manufactured by Zeiss, tube voltage 60 kV, tube current 83 μA, pixel size 1.5 μm/pixel). Specifically, 1601 continuous transmission images are taken from 0° to 360° around the entire circumference of the threadlike adhesive body. The obtained images are three-dimensionally reconstructed to obtain data using image analysis software (ImageJ, AVIZO (manufactured by Thermo Fisher Scientific)) to identify the core material, the adhesive, and air by performing ternary value conversion and noise removal based on brightness. Note that this identification is performed by checking the brightness of air and the adhesive separately and setting a first threshold using an intermediate value thereof, and then checking the brightness of the adhesive and the core material separately and setting a second threshold using an intermediate value thereof. An area of a core material-air interface (Interface 1) and an area of a core material-adhesive interface (Interface 2) are calculated using the images obtained after the ternary value conversion, and then the coverage is calculated by the following formula.

Coverage (%) = {Area of Interface 2/(Area of Interface 1 + Area of Interface 2)} × 100

Note that Interface 1 does not include an interface between the core material and the voids in the threadlike adhesive body according to the embodiment of the present invention. When the filament is a hollow yarn, Interface 1 does not include an interface between the core material and voids in the filament.

Furthermore, Interface 2 is intended as the interface between the adhesive and air. Interface 2 does not include the interface between the adhesive and the voids in the threadlike adhesive body according to the embodiment of the present invention. When the filament is a hollow yarn, Interface 2 does not include the interface between the adhesive and the voids in the filament.

The core material may be impregnated with the adhesive forming the adhesive layer. Here, "the core material is impregnated with the adhesive" means that the adhesive is present among the plurality of filaments in the core material. When the core material is impregnated with the adhesive, the adhesive and the core material maintain adhesion therebetween and are hard to peel off from each other, thereby improving the strength of the threadlike adhesive body.

In one embodiment, a storage elastic modulus G' (0°C) of the adhesive at 0°C exceeds $8.53 \times 10^4$ Pa. If G' (0°C) of the adhesive is $8.53 \times 10^4$ Pa or less, when the threadlike adhesive body is unwound after being made into a wound body, the adhesive that has adhered to each other will stretch due to a low elastic modulus thereof and then is cut, resulting in variation in thread width. By setting G' (0°C) to exceed $8.53 \times 10^4$ Pa, the adhesive is cut without being stretched during the unwinding, making it possible to prevent the variation in thread width.

From the viewpoint of preventing the variation in thread width, G' (0°C) is preferably $8.54 \times 10^4$ Pa or more, more preferably $1.0 \times 10^5$ Pa or more, and still more preferably $2.0 \times 10^5$ Pa or more.

From the viewpoint of preventing a decrease in initial adhesive strength, G' (0°C) is preferably $1.0 \times 10^7$ Pa or less, more preferably $5.0 \times 10^6$ Pa or less, and still more preferably $1.0 \times 10^6$ Pa or less.

In another embodiment, the elastic modulus G' (23°C) of the adhesive at 23°C exceeds $3.04 \times 10^4$ Pa. If G' (23°C) of the adhesive is $3.04 \times 10^4$ Pa or less, when the threadlike adhesive body is unwound after being made into a wound body, the adhesive that has adhered to each other will stretch due to a low elastic modulus thereof and then is cut, resulting in variation in thread width. By setting G' (23°C) to exceed $3.05 \times 10^4$ Pa, the stretching of the adhesive during unwinding can be prevented, and the adhesive is cut without being stretched, making it possible to prevent the variation in thread width.

From the viewpoint of preventing the variation in thread width, G' (23°C) is preferably $3.05 \times 10^4$ Pa or more, more preferably $4.0 \times 10^4$ Pa or more, and still more preferably $5.0 \times 10^4$ Pa or more.

From the viewpoint of preventing the decrease in initial adhesive strength, G' (23°C) is preferably $9.0 \times 10^6$ Pa or less, more preferably $6.0 \times 10^6$ Pa or less, and still more preferably $3.0 \times 10^6$ Pa or less.

The storage elastic modulus of the adhesive at 0°C and 23°C can be measured using a dynamic viscoelasticity measuring device by punching out the adhesive layer with a thickness of 1 mm formed by the adhesive to a diameter of 7.9 mm to obtain a cylindrical pellet as a sample.

More specifically, the storage elastic modulus of the adhesive at 0°C and 23°C can be measured by a method described in Examples below.

The adhesive of the present embodiment is preferably formed from an adhesive containing a base polymer as a main component. A type of the adhesive is not particularly limited, and for example, an acrylic adhesive, a rubber-based adhesive, a vinyl alkyl ether-based adhesive, a silicone-based adhesive, a polyester-based adhesive, a polyamide-based adhesive, a urethane-based adhesive, a fluorine-based adhesive, and an epoxy-based adhesive can be used.

Among these, from the viewpoint of adhesiveness, the acrylic adhesives and rubber-based adhesives are preferred, and the acrylic adhesives are more preferred. Note that one kind of the adhesive may be used alone, or two or more kinds thereof may be used in combination.

The rubber-based adhesive contains, as a main component, a rubber-based polymer such as natural rubber, a styrene-isoprene-styrene block copolymer, a styrene-butadiene-styrene block copolymer, a styrene-ethylene-butylene-styrene block copolymer, a styrene-butadiene rubber, polybutadiene, polyisoprene, polyisobutylene, butyl rubber, chloroprene rubber, and silicone rubber.

Here, the term "acrylic adhesive" refers to an adhesive containing an acrylic polymer as a base polymer (a main component of polymer components, that is, a component that accounts for 50 mass% or more). The term "acrylic polymer" refers to a polymer having a monomer having at least one (meth)acryloyl group in one molecule (hereinafter, this may be referred to as an "acrylic monomer") as a main constituent monomer component (a main component of the monomer, that is, a component that accounts for more than 50 mass% of a total amount of monomers that constitute the acrylic polymer). In the present specification, the term "(meth)acryloyl" comprehensively refers to acryloyl and methacryloyl. Similarly, the term "(meth)acrylic acid ester" comprehensively refers to acrylic acid ester and methacrylic acid ester, and the term "(meth)acrylic" comprehensively refers to acrylic and methacrylic.

The acrylic polymer is preferably, for example, a polymer of a monomer raw material that contains alkyl (meth)acrylate as a main monomer and may further contain a sub-monomer copolymerizable with the main monomer. The main monomer herein refers to a component that accounts for more than 50 mass% of the monomer composition in the monomer raw material.

As the alkyl (meth) acrylate, for example, a compound represented by the following Formula (1) can be suitably used.

$$CH_2=C(R^1)COOR^2 \qquad (1)$$

Here, $R^1$ in the above Formula (1) represents a hydrogen atom or a methyl group. $R^2$ represents a chain alkyl group having 1 to 20 carbon atoms. Hereinafter, such a range of carbon atoms may be referred to as "$C_{1-20}$".

Examples of alkyl (meth)acrylates whose $R^2$ represents a chain alkyl group of $C_{1-20}$, include methyl (meth)

acrylate, ethyl (meth)acrylate, propyl (meth)acrylate, isopropyl (meth)acrylate, n-butyl (meth)acrylate, isobutyl (meth) acrylate, s-butyl (meth)acrylate, pentyl (meth)acrylate, isopentyl (meth)acrylate, hexyl (meth)acrylate, heptyl (meth) acrylate, 2-ethylhexyl (meth)acrylate, octyl (meth)acrylate, isooctyl(meth)acrylate, nonyl (meth)acrylate, isononyl (meth) acrylate, decyl (meth)acrylate, isodecyl (meth)acrylate, undecyl (meth)acrylate, lauryl (meth)acrylate, tridecyl (meth) acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. These alkyl (meth)acrylates may be used alone, or two or more kinds of the alkyl (meth)acrylates may be used in combination.

From the viewpoint of adhesion stability and the like of the adhesive, it is appropriate to use alkyl (meth)acrylate whose $R^2$ represents a chain alkyl group of $C_{1-14}$ (for example, $C_{2-10}$, typically $C_{4-8}$), as the main monomer.

From the viewpoint of adhesive properties, it is preferable to use alkyl acrylate whose $R^1$ represents a hydrogen atom and $R^2$ represents a chain alkyl group of $C_{4-8}$ (hereinafter simply referred to as $C_{4-8}$ alkyl acrylate) as the main monomer. Preferred examples include n-butyl acrylate (BA) and 2-ethylhexyl acrylate (2EHA).

For the purpose of controlling the storage elastic modulus of the adhesive at 0°C and 23°C within the above-mentioned ranges, one preferred embodiment is one in which n-butyl acrylate or 2-ethylhexyl acrylate is used as the main monomer.

That is, it is preferable that the adhesive forming the adhesive contains an acrylic polymer, and an amount of n-butyl acrylate or 2-ethylhexyl acrylate in the acrylic polymer is more than 50 mass% relative to a total amount of monomer components constituting the acrylic polymer. The amount is more preferably 60 mass% or more, and further preferably 70 mass% or more. From the viewpoint of preventing the decrease in adhesive strength, the amount is preferably 97 mass% or less, more preferably 95 mass% or less, and still more preferably 90 mass% or less.

In the present embodiment, the present invention can be preferably implemented in a mode in which the amount of $C_{4-8}$ alkyl acrylate is more than 50 mass%, may be 60 mass% or more, may be 70 mass% or more, or may be 85 mass% or more, in total, with respect to the total amount of the monomer components constituting the acrylic polymer. On the other hand, from the viewpoint of cohesive strength and the like, a proportion of $C_{4-8}$ alkyl acrylate in the monomer components is usually suitably 99.5 mass% or less, and may be 98 mass% or less (for example, less than 97 mass%).

The amount of alkyl (meth)acrylates in total relative to the total amount of the monomer components constituting the acrylic polymer is typically more than 50 mass%, and can be, for example, 70 mass% or more, and may be 85 mass% or more, or may be 90 mass% or more. Furthermore, a proportion of the alkyl (meth)acrylates in the monomer components is typically less than 100 mass%, and from the viewpoint of cohesive strength and the like, the proportion is usually appropriately 99.5 mass% or less, and may be 98 mass% or less (for example, less than 97 mass%).

For the purpose of controlling the storage elastic modulus of the adhesive at 0°C and 23°C to be within the above ranges, another preferred mode is that at least one selected from the group consisting of an alkyl(meth)acrylate having a linear alkyl group with 1 to 3 carbon atoms, an alkyl(meth)acrylate having a branched alkyl group with 3 or 4 carbon atoms, and an alicyclic monomer, is contained.

That is, it is also preferable that the adhesive composition forming the adhesive contains an acrylic polymer, and as a monomer component constituting the acrylic polymer, at least one selected from the group consisting of an alkyl(meth) acrylate having a linear alkyl group with 1 to 3 carbon atoms, an alkyl(meth)acrylate having a branched alkyl group with 3 or 4 carbon atoms, and an alicyclic monomer, is contained.

Homopolymers of these monomers have relatively high Tg, and therefore, by containing a monomer selected from these as a monomer component, it is easy to control the storage elastic modulus of the adhesive within the predetermined range of the present invention. Hereinafter, these monomers are also referred to as high Tg monomers.

As the alicyclic monomer, a cycloalkyl (meth)acrylate having a cycloalkyl group with 4 to 10 carbon atoms which may have a substituent (for example, a linear or branched alkyl group with 1 to 6 carbon atoms) is preferable, a cycloalkyl acrylate having a cycloalkyl group with 4 to 10 carbon atoms which may have a substituent (for example, a linear or branched alkyl group with 1 to 6 carbon atoms) is more preferable, and cyclohexyl acrylate and 3,3,5-trimethylcyclohexyl (meth)acrylate are particularly preferable.

As the alkyl (meth)acrylate having a linear alkyl group with 1 to 3 carbon atoms, an alkyl acrylate having a linear alkyl group with 1 to 3 carbon atoms is preferred, and methyl acrylate is particularly preferred.

As the alkyl (meth)acrylate having a branched alkyl group with 3 or 4 carbon atoms, an alkyl acrylate having a branched alkyl group with 3 or 4 carbon atoms is preferred, and t-butyl acrylate is particularly preferred.

Among these, the high Tg monomer is preferably an alkyl acrylate having a linear alkyl group with 1 to 3 carbon atoms, and is particularly preferably methyl acrylate.

In a mode in which the high Tg monomer is copolymerized with the acrylic polymer, an amount of the high Tg monomer in total relative to the total amount of the monomer components constituting the acrylic polymer is preferably 1 mass% or more, more preferably 3 mass% or more, and still more preferably 5 mass% or more, from the viewpoint of controlling the storage elastic modulus of the adhesive within the predetermined range of the present invention. From the viewpoint of preventing the decrease in the adhesive strength of the adhesive, the amount is preferably 20 mass% or less, more preferably 18 mass% or less, and still more preferably 15 mass% or less.

That is, the amount in total of at least one selected from the group consisting of the alkyl(meth)acrylate having a linear alkyl group with 1 to 3 carbon atoms, the alkyl(meth)acrylate having a branched alkyl group with 3 or 4 carbon atoms, and the alicyclic monomer is preferably 1 mass% to 20 mass% relative to the total amount of the monomer components constituting the acrylic polymer.

The acrylic polymer may contain a carboxy group-containing monomer as a monomer component constituting the acrylic polymer. Examples of the carboxy group-containing monomer include ethylenically unsaturated monocarboxylic acids such as acrylic acid, methacrylic acid, carboxyethyl (meth)acrylate, carboxypentyl (meth)acrylate, crotonic acid, and isocrotonic acid; and ethylenically unsaturated dicarboxylic acids such as maleic acid, itaconic acid, and citraconic acid, and anhydrides thereof (such as maleic anhydride and itaconic anhydride). These may be used alone or in combination of two or more kinds thereof. Among these, preferred carboxy-containing monomers include acrylic acid (AA) and methacrylic acid (MAA). AA is particularly preferred.

In a mode in which the carboxy group-containing monomer is copolymerized with the acrylic polymer, a content of the carboxy group-containing monomer relative to the total amount of the monomer components constituting the acrylic polymer is not particularly limited and can be, for example, 0.2 mass% or more (typically 0.5 mass% or more), and is usually appropriately 1 mass% or more, and may be 2 mass% or more, or 3 mass% or more.

An upper limit of the content of the carboxyl group-containing monomer is not particularly limited, but from the viewpoint of maintaining good adhesive properties, the content can be, for example, 15 mass% or less, or may be 12 mass% or less, or may be 10 mass% or less.

The acrylic polymer can use, as a monomer component constituting the acrylic polymer, for example, the following functional group-containing monomers (however, not including the above-mentioned carboxy group-containing monomers) alone, or two or more kinds thereof may be used in combination.

Hydroxyl group-containing monomers: for example, hydroxyalkyl (meth)acrylates such as 2-hydroxyethyl (meth)acrylate, 2-hydroxypropyl (meth)acrylate, 3-hydroxypropyl (meth)acrylate, and 4-hydroxybutyl (meth)acrylate; unsaturated alcohols such as vinyl alcohol and allyl alcohol; and polypropylene glycol mono(meth)acrylate.

Amide group-containing monomers: for example, (meth)acrylamide, N,N-dimethyl(meth)acrylamide, N-butyl(meth)acrylamide, N-methylol(meth)acrylamide, N-methylolpropane(meth)acrylamide, N-methoxymethyl(meth)acrylamide, and N-butoxymethyl(meth)acrylamide.

Amino group-containing monomers: for example, aminoethyl (meth)acrylate, N,N-dimethylaminoethyl (meth)acrylate, and t-butylaminoethyl (meth)acrylate.

Epoxy group-containing monomers: for example, glycidyl (meth)acrylate, methyl glycidyl (meth)acrylate, and allyl glycidyl ether.

Cyano group-containing monomers: for example, acrylonitrile, and methacrylonitrile.

Keto group-containing monomers: for example, diacetone (meth)acrylamide, diacetone (meth)acrylate, vinyl methyl ketone, vinyl ethyl ketone, allyl acetoacetate, and vinyl acetoacetate.

Monomers having a nitrogen atom-containing ring: for example, N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, and N-(meth)acryloylmorpholine.

When the monomer components constituting the acrylic polymer include the functional group-containing monomer as described above, a content of the functional group-containing monomer in the monomer components is not particularly limited. From the viewpoint of adequately exerting the effects of the use of the functional group-containing monomer, the content of the functional group-containing monomer in the monomer components can be, for example, 0.1 mass% or more, is usually and appropriately 0.5 mass% or more, and may be 1 mass% or more. From the viewpoint of making it easy to balance adhesion performance, the content is usually and appropriately 40 mass% or less, preferably 20 mass% or less, and may be 10 mass% or less (for example, 5 mass% or less). The technique disclosed herein can also be preferably implemented in a mode in which the monomer components substantially include no functional group-containing monomer (for example, a mode in which the monomer components substantially include only an alkyl (meth)acrylate and a carboxy group-containing monomer). Here, the monomer components substantially including no functional group-containing monomer means that functional group-containing monomers are not used at least intentionally, and it is permissible for functional group-containing monomers to be unintentionally contained in an amount of, for example, 0.05 mass% or less (typically, 0.01 mass% or less).

The monomer components constituting the acrylic polymer may contain copolymerization components other than the above-mentioned monomers. Examples of other copolymerization components include vinyl ester monomers such as vinyl acetate, vinyl propionate, and vinyl laurate; aromatic vinyl compounds such as styrene, substituted styrenes (such as α-methylstyrene), and vinyl toluene; aromatic ring-containing (meth)acrylates such as aryl (meth)acrylates (such as phenyl (meth)acrylate), aryloxyalkyl (meth)acrylates (such as phenoxyethyl (meth)acrylate), and arylalkyl (meth)acrylates (such as benzyl (meth)acrylate); olefin monomers such as ethylene, propylene, isoprene, butadiene, and isobutylene; chlorine-containing monomers such as vinyl chloride and vinylidene chloride; isocyanate group-containing monomers such as 2-(meth)acryloyloxyethyl isocyanate; alkoxy group-containing monomers such as methoxyethyl (meth)acrylate and ethoxyethyl (meth)acrylate; vinyl ether monomers such as methyl vinyl ether and ethyl vinyl ether; and polyfunctional monomers having two or more (for example, three or more) polymerizable functional groups (for example, (meth)acryloyl groups) in one molecule, such as 1,6-hexanediol di(meth)acrylate and trimethylolpropane tri(meth) acrylate.

An amount of such other copolymerization components is not particularly limited and may be appropriately selected depending on purpose and application thereof, and from the viewpoint of adequately exerting the effects of use, the amount thereof is usually and appropriately 0.05 mass% or more, and may be 0.5 mass% or more. From the viewpoint of making it easy to balance the adhesion performance, the content of other copolymerization components in the monomer components is usually and appropriately 20 mass% or less, and may be set to 10 mass% or less (for example, 5 mass% or less). The present embodiment can also be preferably implemented in a mode in which the monomer components substantially include no other copolymerization components. Here, the monomer components substantially including no other copolymerization components means that other copolymerization components are not used at least intentionally, and it is permissible for other copolymerization components to be unintentionally contained in an amount of, for example, 0.01 mass% or less.

The adhesive may suitably contain various additives such as an adhesive-imparting resin, a crosslinking agent, a viscosity modifier (such as a thickener), a leveling agent, a release modifier, a plasticizer, a softener, a filler, a colorant (such as pigment or dye), a surfactant, an antistatic agent, a preservative, an anti-aging agent, an ultraviolet absorber, an antioxidant and a light stabilizer.

It is also preferable to add a crosslinking agent to the acrylic adhesive. As the crosslinking agent used for the acrylic adhesives, a commonly used crosslinking agent can be used, and examples thereof include silane-based crosslinking agents, organic peroxides, epoxy-based compounds, amino group-containing compounds, organic metal salts, metal alcoholates, metal chelates, hydrazide-based crosslinking agents, carbodiimide-based crosslinking agents, isocyanate-based crosslinking agents, and silanol-based crosslinking agents. Among these, organic metal salts, metal chelates, hydrazide-based crosslinking agents, and silane-based crosslinking agents are preferred since crosslinking is rapidly completed after the adhesive composition is dried. In a case of a water-dispersible adhesive, hydrazide-based crosslinking agents and silane-based crosslinking agents are particularly more preferred. The crosslinking agent may be either oil-soluble or water-soluble, and may be used alone or in combination of two or more kinds thereof.

As the silane-based crosslinking agent, it is preferable to use a silane-based monomer copolymerizable with the above-mentioned alkyl (meth)acrylate. The silane-based monomer is not particularly limited as long as it is a polymerizable compound having a silicon atom, and a silane compound having a (meth)acryloyl group, such as a (meth) acryloyloxyalkylsilane derivative, is preferred because of excellent copolymerizability thereof with the above-mentioned alkyl (meth)acrylate. Examples of the silane-based monomer include γ-methacryloxypropyltrimethoxysilane, 3-acryloyloxypropyltrimethoxysilane, 3-methacryloyloxypropyltriethoxysilane, 3-acryloyloxypropyltriethoxysilane, 3-methacryloyloxypropylmethyldimethoxysilane, 3-acryloyloxypropylmethyldimethoxysilane, 3-methacryloyloxypropylmethyldiethoxysilane, and 3-acryloyloxypropylmethyldiethoxysilane. These silane-based monomers can be used alone or in combination of two or more kinds thereof.

In addition to the above, examples of copolymerizable silane-based monomers that can be used include vinyltrimethoxysilane, vinyltriethoxysilane, 4-vinylbutyltrimethoxysilane, 4-vinylbutyltriethoxysilane, 8-vinyloctyltrimethoxysilane, 8-vinyloctyltriethoxysilane, 10-methacryloyloxydecyltrimethoxysilane, 10-acryloyloxydecyltrimethoxysilane, 10-methacryloyloxydecyltriethoxysilane, and 10-acryloyloxydecyltriethoxysilane.

The amount of the crosslinking agent used can be appropriately selected depending on the type of the monomer raw material and the application of an adhesive article. **In** the present embodiment, the amount of the crosslinking agent relative to 100 parts by mass of the monomer raw material (excluding the crosslinking agent) is preferably in the range of 0.005 parts by mass to 5 parts by mass, and more preferably 0.01 part by mass to 3 parts by mass.

**In** the present embodiment, other crosslinking agents may also be used, and crosslinking using other crosslinking agents, UV crosslinking, radiation crosslinking such as electron beam crosslinking, and the like can be applied. As the other crosslinking agent, a commonly used crosslinking agent can be used, and examples thereof include organic peroxides, epoxy compounds, amino group-containing compounds, organic metal salts, metal alcoholates, metal chelates, hydrazide crosslinking agents, carbodiimide crosslinking agents, isocyanate crosslinking agents, and silane or silanol crosslinking agents. Other crosslinking agents may be either oil-soluble or water-soluble.

In the adhesive according to the present embodiment, an adhesive-imparting resin can be preferably used for the purpose of controlling the storage elastic modulus at 0°C and 23°C to be within the above-mentioned ranges.

As the adhesive-imparting resin, any appropriate adhesive-imparting resin can be used. Specific examples of the adhesive-imparting resin include: rosin-based adhesive-imparting resins (for example, unmodified rosin, modified rosin, rosin phenolic resin, rosin ester resin, and the like); terpene-based adhesive-imparting resins (for example, terpene-based resin, terpene phenolic resin, styrene modified terpene resin, aromatic modified terpene resin, hydrogenated terpene resin); hydrocarbon-based adhesive-imparting resins (for example, aliphatic hydrocarbon resin, aliphatic cyclic hydrocarbon resin, aromatic hydrocarbon resin (for example, styrene-based resin, xylene-based resin, and the like), aliphatic/aromatic petroleum resin, aliphatic/cycloaliphatic petroleum resin, hydrogenated hydrocarbon resin, coumarone-based resin, coumarone indene resin, and the like); phenol-based adhesive-imparting resins (for example, alkyl phenol resin, xylene formaldehyde resin, resol, novolak, and the like); ketone-based adhesive-imparting resins; polyamide-based adhesive-imparting resins; epoxy-based adhesive-imparting resins; and elastomer-based adhesive-imparting resins. Among these, the rosin-based adhesive-imparting resins, terpene-based adhesive-imparting resins, or hydrocarbon-based adhesive-imparting resins (styrene-based resin and the like) are preferable. The adhesive-imparting resins may be used alone or in combination of two or more kinds thereof.

In a mode in which the adhesive contains an adhesive-imparting resin, the amount of the adhesive-imparting resin added is, from the viewpoint of controlling the storage elastic modulus of the adhesive to be within the predetermined range of the present invention, preferably 1 part by mass or more, more preferably 10 parts by mass or more, still more preferably 20 parts by mass or more, and even more preferably 30 parts by mass or more, relative to 100 parts by mass of the base polymer. Furthermore, from the viewpoint of preventing the decrease in adhesive strength of the adhesive, the amount is preferably 100 parts by mass or less, more preferably 90 parts by mass or less, and still more preferably 70 parts by mass or less.

The adhesive composition that forms the adhesive (which may be an adhesive) contains the base polymer and the adhesive-imparting resin, and preferably contains 1 to 100 parts by mass of the adhesive-imparting resin relative to 100 parts by mass of the base polymer.

Note that as the adhesive composition, either type of a solvent type adhesive and a water-dispersible type adhesive may be used. From the viewpoint of enabling high-speed coating, being environmentally friendly, and having a small influence (swelling or dissolution) on the core material caused by the solvent, the water-dispersible adhesive composition is preferred.

Specifically, an adhered amount of the adhesive (mass of the adhesive per unit length) is preferably 2 mg/m or more, more preferably 5 mg/m or more, and still more preferably 8 mg/m or more. On the other hand, when the adhered amount of the adhesive is excessive, it is necessary to apply the adhesive composition to the core material a plurality of times in the production process, or it takes time to dry the applied adhesive composition, resulting in a low production efficiency. Therefore, the adhered amount of the adhesive is preferably 200 mg/m or less, more preferably 180 mg/m or less, and still more preferably 160 mg/m or less.

From the viewpoint of increasing the coverage of the core material, a content of the adhesive in the threadlike adhesive body is preferably 10 mass% or more, more preferably 20 mass% or more, and particularly preferably 30 mass% or more. From the viewpoint of preventing the decrease in strength of the threadlike adhesive body, the content of the adhesive in the threadlike adhesive body is preferably 90 mass% or less, more preferably 80 mass% or less, and particularly preferably 70 mass% or less.

In the present embodiment, a thread width of the threadlike adhesive body is preferably 50 $\mu$m to 2000 $\mu$m, and more preferably 100 $\mu$m to 1000 $\mu$m, from the viewpoints of strength and handleability.

[Method for Producing Threadlike Adhesive Body]

The threadlike adhesive body according to the embodiment of the present invention can be produced by known methods, for example, a method including a coating step of coating the core material with a coating liquid containing the adhesive.

The core material may be coated with the coating liquid by, for example, dipping, immersion, application or the like, and may be dried by heat as necessary.

The heat drying may be performed, for example, at a temperature of 80°C to 120°C, preferably 90°C to 110°C, for example, for 20 seconds to 3 minutes, preferably 30 seconds to 2 minutes.

The coating liquid can be applied by using a common coater such as a gravure roll coater, a reverse roll coater, a kiss roll coater, a dip roll coater, a bar coater, a knife coater, and a spray coater.

A method for producing the threadlike adhesive body of the present embodiment may or may not include a fiber opening step. In the fiber opening step, when the core material is coated with the adhesive, the core material is opened by running the core material along a nonrotating roller.

When the threadlike adhesive body of the present embodiment is produced by a method without a fiber opening step, the porosity in the threadlike adhesive body can be adjusted to be high. When the threadlike adhesive body of the present embodiment is produced by a method including a fiber opening step, the porosity in the threadlike adhesive body can be adjusted to be low.

When the method for producing the threadlike adhesive body of the present embodiment includes a coating step, it is preferable that a roller is used in the coating step and a rotation speed of the roller is 0.3 times to 5.0 times a feeding speed of the core material. By keeping the rotation speed of the roller within the above range, the core material is prevented from being opened, making it easier to adjust the porosity of the threadlike adhesive body of the present embodiment.

The rotation speed of the roller is more preferably 0.4 times to 4.0 times the feeding speed of the core material, further preferably 0.5 times to 3.0 times, and particularly preferably 0.8 times to 1.5 times.

In the coating step, it is preferable to apply a tension of 6.0 mN/dtex or less to the core material. By applying a tension of 6.0 mN/dtex or less to the core material, the core material is prevented from being opened, making it easier to adjust the porosity of the threadlike adhesive body of the present embodiment.

The tension applied to the core material is preferably 0.2 mN/dtex to 6.0 mN/dtex, and more preferably 0.4 mN/dtex to 5.0 mN/dtex.

[Uses of Threadlike Adhesive Body]

The threadlike adhesive body according to the embodiment of the present invention can be stuck to a narrow member or a narrow region while being prevented from protruding, and is also preferably applied to a complex shape such as a curved line, a curved surface, and an uneven shape, and is also preferred in terms of easy disassembly (rework). Furthermore, because of excellent adhesive strength thereof, the threadlike adhesive body can be used to adhere various items.

For example, the threadlike adhesive body according to the embodiment of the present invention can be suitably used for fixing an article during production of an electronic device and fixing vehicle-mounted components, and can be applied to fixing of a narrow frame of a mobile terminal such as a mobile phone or a smartphone, and fixing of batteries, motors, and the like.

For example, when an adhesive tape is stuck to an adherend having a part with a complicated shape such as a curved line, a curved surface, or an uneven shape, a wrinkle or overlapping may occur in the adhesive tape in such a part, and it is difficult to finely stick the adhesive tape while preventing a protrusion, and the part where a wrinkle or overlapping occurs may cause a decrease in the adhesive strength. In order to stick the adhesive tape while preventing the occurrence of a wrinkle or overlapping, it is conceivable to stick the adhesive tape after finely cutting the adhesive tape. However, workability significantly deteriorates. On the other hand, the threadlike adhesive body according to the embodiment of the present invention can be firmly stuck without causing a wrinkle or overlapping even when being stuck to a part having a complicated shape such as a curved line, a curved surface, and an uneven shape. Further, since such a threadlike adhesive body can be stuck to a part to be stuck at one time, that is, in one step, the threadlike adhesive body is excellent in workability and can be applied to an automation line.

Specifically, the threadlike adhesive body according to the embodiment of the present invention can be suitably used, for example, for fixing cables such as electric wires and optical fibers, optical fiber sensors such as LED fiber light and Fiber Bragg Gratings (FBG), various wire members (linear members) such as a yarn, a string, and a wire, and narrow members, in a desired form.

Even in a case where a wire member or a narrow member is fixed to another member in a complicated shape, the threadlike adhesive body according to the embodiment of the present invention can be firmly fixed with excellent workability while suppressing protrusion, wrinkles, and overlapping in accordance with the complicated shape that the wire member or the narrow member have. Note that in a case where the wire member or the narrow member is fixed to another member, the threadlike adhesive body according to the embodiment of the present invention is stuck in advance in accordance with a form in which the wire member or the narrow member is to be fixed on a surface of the another member, and then, the wire member or the narrow member can be bonded and fixed in accordance with the threadlike adhesive body stuck to the surface of the another member. Alternatively, the threadlike adhesive body according to the embodiment of the present invention is stuck to a wire member or a narrow member, and then, the wire member or the narrow member may be fixed to another member in a desired form.

The threadlike adhesive body according to the embodiment of the present invention can also be suitably used for temporary fixing (temporary tacking) of an article for temporarily fixing (temporarily tacking) one article to a surface of another article. More specifically, the threadlike adhesive body according to the embodiment of the present invention can be used for temporary fixing (temporary tacking) during production process of, for example, fiber products and leather products such as clothes, shoes, bags, and hats. However, the uses are not limited to these examples, and the threadlike adhesive body is suitably used for various applications in which temporary fixing (temporary tacking) is desired.

For example, when one article is fixed to a surface of the other article, the one article is temporarily fixed and positioned on the surface of the other article in advance using the threadlike adhesive body, and then both articles are fixed (finally fixed) by a fixing method such as thermocompression bonding and sewing. In this case, the threadlike adhesive body according to the embodiment of the present invention easily and temporarily fixes the two articles without a fixing portion provided between the two articles. For example, in a case where a fiber product or a leather product is sewn, when temporary fixing is performed using the threadlike adhesive body, the temporary fixing can be easily performed while avoiding a part to be sewed, and the pressure-sensitive adhesive can be easily prevented from adhering to a needle.

In addition, the threadlike adhesive body according to the embodiment of the present invention can be well stuck while preventing a protrusion, a wrinkle, and overlapping even when shapes of two articles are a complicated shape such as a curved line, a curved surface, and an uneven shape. Further, the threadlike adhesive body can be stuck in one step, and workability is good.

Even in a case of an easily deformable member, such as fabric, cloth, and leather that forms a fiber product or a leather product, temporary fixing can be performed using the threadlike adhesive body according to the embodiment of the present invention, so that deformation of the member due to tension can be prevented, and design aesthetics after fixing (final fixing) is improved.

Further, after two articles are fixed (finally fixed) using the threadlike adhesive body according to the embodiment of the present invention, the threadlike adhesive body according to the embodiment of the present invention can be pulled out and removed if necessary from the two articles that are fixed (finally fixed). In this case, the adhesive can be prevented from squeezing out, and deterioration of design aesthetics due to aging discoloration of the remaining adhesive can be satisfactorily prevented.

The threadlike adhesive body according to the embodiment of the present invention can be used as a dam material for preventing squeezing out of a glue or an adhesive when a glue or an adhesive is applied to an adhesion object (adherend). The dam material can be used, for example, to prevent squeezing out of a sealing resin used for bonding an optical panel. In the case where the threadlike adhesive body is used as a dam material, the threadlike adhesive body may be peeled off or remain after the glue or the adhesive is cured.

The threadlike adhesive body according to the embodiment of the present invention can be twisted with a yarn made of other materials to form a composite yarn or can be woven with a yarn or cloth (including nonwoven fabrics and sheets) made of other materials, thereby function combination can be achieved.

As described above, the following matters are disclosed in the present specification.

[1] A threadlike adhesive body, containing:

a core material; and
an adhesive that covers a surface of the core material in a longitudinal direction, in which
the adhesive has a storage elastic modulus exceeding $8.53 \times 10^4$ Pa at 0°C.

[2] A threadlike adhesive body, containing:

a core material; and
an adhesive that covers a surface of the core material in a longitudinal direction, in which
the adhesive has a storage elastic modulus exceeding $3.04 \times 10^4$ Pa at 23°C.

[3] The threadlike adhesive body according to [1] or [2], in which
the number of filaments contained in the core material is four or more.

[4] The threadlike adhesive body according to any one of [1] to [3], in which

the adhesive contains an acrylic polymer, and
an amount of n-butyl acrylate or 2-ethylhexyl acrylate in the acrylic polymer is more than 50 mass% relative to a total amount of monomer components constituting the acrylic polymer.

[5] The threadlike adhesive body according to any one of [1] to [3], in which

the adhesive contains an acrylic polymer, and
as a monomer component constituting the acrylic polymer, at least one selected from the group consisting of an alkyl(meth)acrylate having a linear alkyl group with 1 to 3 carbon atoms, an alkyl(meth)acrylate having a branched alkyl group with 3 or 4 carbon atoms, and an alicyclic monomer, is contained.

[6] The threadlike adhesive body according to [5], in which
an amount in total of at least one selected from the group consisting of the alkyl(meth)acrylate having a linear alkyl group with 1 to 3 carbon atoms, the alkyl(meth)acrylate having a branched alkyl group with 3 or 4 carbon atoms, and the alicyclic monomer is 1 mass% to 20 mass% relative to a total amount of monomer components constituting the acrylic polymer.

[7] The threadlike adhesive body according to any one of [1] to [6], in which

the adhesive contains a base polymer and an adhesive-imparting resin, and
the adhesive-imparting resin is contained in an amount of 1 part by mass to 100 parts by mass relative to 100 parts by mass of the base polymer.

Examples

The present invention will be described in more detail below with reference to Examples, but the present invention is not limited to the following Examples in any way.

<Preparation of Acrylic Polymer Emulsion>

(Preparation of Acrylic Polymer Emulsion 1)

Into a reaction vessel equipped with a cooling tube, a nitrogen introduction tube, a thermometer, and a stirrer, 40 parts by mass of ion-exchanged water was added, and stirring was performed at 60°C for 1 hour or more while introducing nitrogen gas to carry out nitrogen substitution. To this reaction vessel, 0.1 part by mass of 2,2'-azobis[N-(2-carboxyethyl)-2-methylpropionamidine]n hydrate (polymerization initiator) was added. While the reaction solution was maintained at 60°C, a monomer emulsion A described below was gradually added dropwise thereto over 4 hours to allow an emulsion polymerization reaction to proceed.

Examples of the monomer emulsion A include an emulsion obtained by adding 85 parts by mass of 2-ethylhexyl acrylate (2EHA), 13 parts by mass of methyl acrylate (MA), 1.25 parts by mass of acrylic acid (AA), 0.75 parts by mass of methacrylic acid (MAA), 0.05 parts by mass of lauryl mercaptan (chain transfer agent), 0.02 parts by mass of $\gamma$-methacryloxypropyltrimethoxysilane (manufactured by Shin-Etsu Chemical Co., Ltd., trade name: "KBM-503"), and 2 parts by mass of sodium polyoxyethylene lauryl sulfate (emulsifier) to 30 parts by mass of ion-exchanged water.

After completion of the dropwise addition of the monomer emulsion A, the reaction solution was further kept at 60°C for 3 hours and cooled to room temperature, and the pH thereof was then adjusted to 7 by addition of 10% ammonia water to obtain an acrylic polymer emulsion 1 (water-dispersible acrylic polymer).

(Preparation of Acrylic Polymer Emulsion 2)

Into a reaction vessel equipped with a cooling tube, a nitrogen introduction tube, a thermometer, and a stirrer, 40 parts by mass of ion-exchanged water was added, and stirring was performed at 60°C for 1 hour or more while introducing nitrogen gas to carry out nitrogen substitution. To this reaction vessel, 0.1 part by mass of 2,2'-azobis[N-(2-carboxyethyl)-2-methylpropionamidine]n hydrate (polymerization initiator) was added. While the reaction solution was maintained at 60°C, a monomer emulsion B described below was gradually added dropwise thereto over 4 hours to allow an emulsion polymerization reaction to proceed.

Examples of the monomer emulsion B include an emulsion obtained by adding 68 parts by mass of butyl acrylate (BA), 29.1 parts by mass of 2-ethylhexyl acrylate, 2.9 parts by mass of acrylic acid, 0.05 parts by mass of lauryl mercaptan (chain transfer agent), 0.03 parts by mass of $\gamma$-methacryloxypropyltrimethoxysilane (manufactured by Shin-Etsu Chemical Co., Ltd., trade name: "KBM-503 "), and 2 parts by mass of sodium polyoxyethylene lauryl sulfate (emulsifier) to 25 parts by mass of ion-exchanged water.

After completion of the dropwise addition of the monomer emulsion B, the reaction solution was further kept at 60°C for 3 hours and cooled to room temperature, and the pH thereof was then adjusted to 7 by addition of 10% ammonia water to obtain an acrylic polymer emulsion 2 (water-dispersible acrylic polymer).

(Preparation of Acrylic Polymer Emulsion 3)

Into a reaction vessel equipped with a cooling tube, a nitrogen introduction tube, a thermometer, and a stirrer, 40 parts by mass of ion-exchanged water was added, and stirring was performed at 60°C for 1 hour or more while introducing nitrogen gas to carry out nitrogen substitution. To this reaction vessel, 0.1 part by mass of 2,2'-azobis[N-(2-carboxyethyl)-2-methylpropionamidine]n hydrate (polymerization initiator) was added. While the reaction solution was maintained at 60°C, a monomer emulsion C described below was gradually added dropwise thereto over 4 hours to allow an emulsion polymerization reaction to proceed.

Examples of the monomer emulsion C include an emulsion obtained by adding 86.6 parts by mass of butyl acrylate, 9.6 parts by mass of 2-ethylhexyl acrylate, 3.8 parts by mass of acrylic acid, 0.055 parts by mass of lauryl mercaptan (chain transfer agent), 0.07 parts by mass of $\gamma$-methacryloxypropyltrimethoxysilane (manufactured by Shin-Etsu Chemical Co., Ltd., trade name: "KBM-503"), and 2 parts by mass of sodium polyoxyethylene lauryl sulfate (emulsifier) to 29 parts by mass of ion-exchanged water.

After completion of the dropwise addition of the monomer emulsion C, the reaction solution was further kept at 60°C for 3 hours and cooled to room temperature, and the pH thereof was then adjusted to 7 by addition of 10% ammonia water to obtain an acrylic polymer emulsion 3 (water-dispersible acrylic polymer).

(Preparation of Acrylic Polymer Emulsion 4)

Into a reaction vessel equipped with a cooling tube, a nitrogen introduction tube, a thermometer, and a stirrer, 40 parts by mass of ion-exchanged water was added, and stirring was performed at 60°C for 1 hour or more while introducing nitrogen gas to carry out nitrogen substitution. To this reaction vessel, 0.1 parts by mass of 2,2'-azobis[N-(2-carboxyethyl)-2-methylpropionamidine]n hydrate (polymerization initiator) was added. While the reaction solution was maintained at 60°C, a monomer emulsion D was gradually added dropwise thereto over 4 hours to allow an emulsion polymerization reaction to proceed.

Examples of the monomer emulsion D include an emulsion obtained by adding 98 parts by mass of 2-ethylhexyl acrylate, 1.25 parts by mass of acrylic acid, 0.75 parts by mass of methacrylic acid, 0.05 parts by mass of lauryl mercaptan (chain transfer agent), 0.02 parts by mass of γ-methacryloxypropyltrimethoxysilane (manufactured by Shin-Etsu Chemical Co., Ltd., trade name: "KBM-503 "), and 2 parts by mass of sodium polyoxyethylene lauryl sulfate (emulsifier) to 30 parts by mass of ion-exchanged water.

After completion of the dropwise addition of the monomer emulsion D, the reaction solution was further kept at 60°C for 3 hours and cooled to room temperature, and the pH thereof was then adjusted to 7 by addition of 10% ammonia water to obtain an acrylic polymer emulsion 4 (water-dispersible acrylic polymer).

<Preparation of Adhesive Liquid (Adhesive Composition)>

(Preparation of Adhesive Liquid 1)

Ion-exchanged water was added to the acrylic polymer emulsion 1 to adjust a solid content concentration thereof to 45 mass%, so as to obtain an adhesive liquid 1.

(Preparation of Adhesive Liquid 2)

An adhesive-imparting resin emulsion (manufactured by Arakawa Chemical Industries, Ltd., trade name: "Super Ester E865NT") was added so that the adhesive-imparting resin was 10 parts by mass per 100 parts by mass of the acrylic polymer contained in the acrylic polymer emulsion 1. Further, ion-exchanged water was added to adjust a solid content concentration thereof to 45 mass%, so as to obtain an adhesive liquid 2.

(Preparation of Adhesive Liquids 3 to 5)

Adhesive liquids were prepared in the same manner as the adhesive liquid 2 except that the addition amounts of the adhesive-imparting resin emulsion were changed so that contents of the adhesive-imparting resin were 20 parts by mass, 32 parts by mass, and 43 parts by mass per 100 parts by mass of the acrylic polymer, respectively.

(Preparation of Adhesive Liquid 6)

An adhesive-imparting resin emulsion (manufactured by Arakawa Chemical Industries, Ltd., trade name: "Tamanol E200NT") was added so that the adhesive-imparting resin was 35 parts by mass per 100 parts by mass of the acrylic polymer contained in the acrylic polymer emulsion 1. Further, ion-exchanged water was added to adjust a solid content concentration thereof to 45 mass%, so as to obtain an adhesive liquid 6.

(Preparation of Adhesive Liquid 7)

Ion-exchanged water was added to the acrylic polymer emulsion 2 to adjust a solid content concentration thereof to 45 mass%, so as to obtain an adhesive liquid 7.

(Preparation of Adhesive Liquid 8)

An adhesive-imparting resin emulsion (manufactured by Arakawa Chemical Industries, Ltd., trade name: "Tamanol E200NT") was added so that the adhesive-imparting resin was 35 parts by mass per 100 parts by mass of the acrylic polymer contained in the acrylic polymer emulsion 2. Further, ion-exchanged water was added to adjust a solid content concentration thereof to 45 mass%, so as to obtain an adhesive liquid 8.

(Preparation of Adhesive Liquid 9)

Ion-exchanged water was added to the acrylic polymer emulsion 3 to adjust a solid content concentration thereof to 45 mass%, so as to obtain an adhesive liquid 9.

(Preparation of Adhesive Liquid 10)

An adhesive-imparting resin emulsion (manufactured by Arakawa Chemical Industries, Ltd., trade name: "Tamanol E200NT") was added so that the adhesive-imparting resin was 35 parts by mass per 100 parts by mass of the acrylic polymer contained in the acrylic polymer emulsion 3. Further, ion-exchanged water was added to adjust a solid content concentration thereof to 45 mass%, so as to obtain an adhesive liquid 10.

(Preparation of Adhesive Liquid 11)

An adhesive-imparting resin emulsion (manufactured by Arakawa Chemical Industries, Ltd., trade name: "Super Ester E865NT") was added so that the adhesive-imparting resin was 20 parts by mass per 100 parts by mass of the acrylic polymer contained in the acrylic polymer emulsion 4. Further, ion-exchanged water was added to adjust a solid content concentration thereof to 45 mass%, so as to obtain an adhesive liquid 11.

<Production of Threadlike Adhesive Body>

(Example 1)

As the core material, a multifilament yarn (fineness: 1169 dtex, number of filaments: 336) was prepared by twisting 70 times per meter of seven polyethylene terephthalate (PET) fibers (manufactured by Teijin Frontier Co., Ltd.) (fineness: 167 dtex, number of filaments: 48).
A viscosity of the adhesive liquid 1 was adjusted, and the core material was coated by dipping using a coating roller. Thereafter, drying was performed at 100°C for 1 minute to obtain a threadlike adhesive body with a glue amount (adhesive amount) of 50 mg/m.
The glue amount was calculated using the following Formula (2) from a mass W1 [mg/m] per unit length of the polyethylene terephthalate (PET) fiber used as the core material and a mass W2 [mg/m] per unit length of the threadlike adhesive body coated with the adhesive after drying.

$$\text{Glue amount [mg/m]} = \text{W2 [mg/m]} - \text{W1 [mg/m]} \quad (2)$$

(Examples 2 to 10)

Threadlike adhesive bodies were prepared in the same manner as in Example 1, except that the adhesive liquids 2 to 10 were used instead of the adhesive liquid 1 to produce the threadlike adhesive bodies.

(Comparative Example 1)

A threadlike adhesive body was produced in the same manner as in Example 1, except that adhesive liquid 11 was used instead of the adhesive liquid 1 to produce the threadlike adhesive body.

<Storage Elastic Modulus of Adhesive>

A storage elastic modulus of the adhesive was determined by the following method using a dynamic viscoelasticity measuring device ("ARES-G2 Rheometer" manufactured by TA Instrument).
Each of the above obtained adhesive liquids was applied onto a release liner and dried to form an adhesive layer with a thickness of 20 $\mu$m on the release liner. The adhesive layer was laminated to a thickness of about 1 mm, and then punched out to a diameter of 7.9 mm to prepare a cylindrical pellet, which was used as a sample for measuring viscoelasticity. The measurement sample was fixed to a parallel plate fixture with a diameter of 7.9 mm, and a storage elastic modulus G' was measured under the following conditions using the dynamic viscoelasticity measuring device. From results thereof, the storage elastic modulus G' at 0°C and 23°C were read.

Measurement: Shear mode

Temperature range: -70°C to 150°C
Heating rate: 5°C/min
Frequency: 1 Hz

<Evaluation>

The obtained threadlike adhesive body was evaluated as follows. Results are shown in Tables 1 and 2.

(Evaluation of Variation in Thread Diameter)

The above threadlike adhesive body was wound up in a length of 40 m onto a bobbin having an outer diameter of 86 mm, an inner diameter of 76 mm (3.0 inches), and a width of 70 mm, with a winding width of 55 mm, to obtain a bobbin-wound thread body.
The above-mentioned bobbin-wound thread body was set horizontally, and the threadlike adhesive body was unwound using a tensile tester ("Shimadzu Autograph AG-100M2", manufactured by Shimadzu Corporation). Test conditions include a temperature of 23°C, a tensile speed of 300 mm/min, and a displacement of 175 mm pulling up.
After unwinding, the threadlike adhesive body was observed under a microscope. The thread width (length in a direction perpendicular to the longitudinal direction) of the threadlike adhesive body was observed at 10 points, and a deviation amount (difference) of maximum and minimum values thereof from a median of the maximum and minimum values was calculated, and taken as a width precision of the threadlike adhesive body.
The above evaluation was carried out at room temperature (23°C).
In the following Tables 1 and 2, the polymer column indicates a monomer type and a blending amount (parts by mass) of each monomer constituting the polymer.

[Table 1]

Table 1

| | | | Example 1 | Example 2 | Example 3 |
|---|---|---|---|---|---|
| Adhesive layer | Composition | Adhesive liquid | Adhesive liquid 1 | Adhesive liquid 2 | Adhesive liquid 3 |
| | | Polymer | 2EHA/MA/AAMAA = 85/13/1.25/0.75 | 2EHA/MA/AA/MAA = 85/13/1.25/0.75 | 2EHA/MA/AAMAA = 85/13/1.25/0.75 |
| | | Adhesive-imparting resin | - | E865NT | E865NT |
| | | Polymer/ adhesive-imparting resin | 100/0 | 100/10 | 100/20 |
| | Elastic modulus | G' (0°C) [Pa] | $1.19 \times 10^5$ | $1.56 \times 10^5$ | $2.56 \times 10^5$ |
| | | G' (23°C) [Pa] | $5.36 \times 10^4$ | $5.72 \times 10^4$ | $5.55 \times 10^4$ |
| Evaluation | | Width [μm] | 413 to 590 | 425 to 549 | 410 to 480 |
| | | Median [μm] | 501 | 487 | 445 |
| | | Width precision [μm] | ±88 | ±62 | ±35 |

Table 1 (continued)

| | | | Example 4 | Example 5 | Example 6 |
|---|---|---|---|---|---|
| Adhesive layer | Composition | Adhesive liquid | Adhesive liquid 4 | Adhesive liquid 5 | Adhesive liquid 6 |
| | | Polymer | 2EHA/MA/AAMAA = 85/13/1.25/0.75 | 2EHA/MA/AAMAA = 85/13/1.25/0.75 | 2EHA/MA/AAMAA = 85/13/1.25/0.75 |
| | | Adhesive-imparting resin | E865NT | E865NT | E200NT |
| | | Polymer/ adhesive-imparting resin | 100/32 | 100/43 | 100/35 |
| | Elastic modulus | G' (0°C) [Pa] | $6.34 \times 10^5$ | $8.06 \times 10^5$ | $6.19 \times 10^5$ |
| | | G' (23°C) [Pa] | $9.38 \times 10^4$ | $8.09 \times 10^4$ | $7.85 \times 10^4$ |
| Evaluation | | Width [μm] | 401 to 447 | 421 to 450 | 421 to 460 |
| | | Median [μm] | 424 | 436 | 441 |
| | | Width precision [μm] | ±23 | ±15 | ±20 |

[Table 2]

Table 2

| | | | Example 7 | Example 8 | Example 9 |
|---|---|---|---|---|---|
| Adhesive layer | Composition | Adhesive liquid | Adhesive liquid 7 | Adhesive liquid 8 | Adhesive liquid 9 |
| | | Polymer | BA/2EHA/AA = 68/29.1/2.9 | BA12EHA/AA = 68/29.1/2.9 | BA/2EHA/AA = 86.6/9.6/3.8 |
| | | Adhesive-imparting resin | - | E200NT | - |
| | | Polymer/adhesive-imparting resin | 100/0 | 100/35 | 100/0 |
| | Elastic modulus | G' (0°C) [Pa] | $1.43 \times 10^5$ | $4.03 \times 10^5$ | $1.64 \times 10^5$ |
| | | G' (23°C) [Pa] | $8.37 \times 10^4$ | $5.97 \times 10^4$ | $9.59 \times 10^4$ |
| Evaluation | | Width [μm] | 405 to 502 | 421 to 462 | 413 to 504 |
| | | Median [μm] | 454 | 442 | 459 |
| | | Width precision [μm] | ±49 | ±21 | ±46 |

Table 2 (continued)

|  |  |  | Example 10 | Comparative Example 1 |
|---|---|---|---|---|
| Adhesive layer | Composition | Adhesive liquid | Adhesive liquid 10 | Adhesive liquid 11 |
|  |  | Polymer | BA/2EHA/AA = 86.6/9.6/3.8 | 2EHA/AA/MAA = 98/1.25/0.75 |
|  |  | Adhesive-imparting resin | E200NT | E865NT |
|  |  | Polymer/adhesive-imparting resin | 100/35 | 100/20 |
|  | Elastic modulus | G' (0°C) [Pa] | $5.39 \times 10^5$ | $8.53 \times 10^4$ |
|  |  | G' (23°C) [Pa] | $8.77 \times 10^4$ | $3.04 \times 10^4$ |
| Evaluation |  | Width [$\mu$m] | 415 to 452 | 400 to 630 |
|  |  | Median [$\mu$m] | 434 | 515 |
|  |  | Width precision [$\mu$m] | $\pm 19$ | $\pm 115$ |

From the results shown in Tables 1 and 2, it was found that the threadlike adhesive bodies of Examples 1 to 10, in which the adhesive has an elastic modulus of more than $8.53 \times 10^4$ at 0°C or the adhesive has a storage elastic modulus of more than $3.04 \times 10^4$ at 23°C, can prevent the variation in thread width when unwound from a wound body.

In contrast, it was found that the threadlike adhesive body of Comparative Example 1, in which the storage elastic modulus of the adhesive at 0°C and 23°C was outside the predetermined ranges, had a large variation in thread width when unwound from a wound body.

The present invention is not limited to the embodiments described above, and can be made in various modifications within the scope of the claims, and embodiments obtained by appropriately combining technical methods disclosed in different embodiments are also included in the technical scope of the present invention.

INDUSTRIAL APPLICABILITY

By using the threadlike adhesive body of the present invention, it is possible to provide a threadlike adhesive body that has small variation in thread width when made into a wound body and then unwound.

Although the present invention has been described in detail with reference to a specific embodiment, it will be apparent to those skilled in the art that various changes and modifications can be made without departing from the spirit and the scope of the present invention.

The present application is based on a Japanese Patent Application (No. 2022-181325) filed on November 11, 2022, the contents of which are incorporated herein by reference.

**Claims**

1. A threadlike adhesive body, comprising:

   a core material; and
   an adhesive that covers a surface of the core material in a longitudinal direction, wherein
   the adhesive has a storage elastic modulus exceeding $8.53 \times 10^4$ Pa at 0°C.

2. A threadlike adhesive body, comprising:

   a core material; and
   an adhesive that covers a surface of the core material in a longitudinal direction, wherein
   the adhesive has a storage elastic modulus exceeding $3.04 \times 10^4$ Pa at 23°C.

3. The threadlike adhesive body according to claim 1 or 2, wherein the number of filaments contained in the core material is four or more.

4. The threadlike adhesive body according to claim 1 or 2, wherein

the adhesive contains an acrylic polymer, and
an amount of n-butyl acrylate or 2-ethylhexyl acrylate in the acrylic polymer is more than 50 mass% relative to a total amount of monomer components constituting the acrylic polymer.

5. The threadlike adhesive body according to claim 1 or 2, wherein

the adhesive contains an acrylic polymer, and
as a monomer component constituting the acrylic polymer, at least one selected from the group consisting of an alkyl(meth)acrylate having a linear alkyl group with 1 to 3 carbon atoms, an alkyl(meth)acrylate having a branched alkyl group with 3 or 4 carbon atoms, and an alicyclic monomer, is contained.

6. The threadlike adhesive body according to claim 5, wherein
an amount in total of at least one selected from the group consisting of the alkyl(meth)acrylate having a linear alkyl group with 1 to 3 carbon atoms, the alkyl(meth)acrylate having a branched alkyl group with 3 or 4 carbon atoms, and the alicyclic monomer is 1 mass% to 20 mass% relative to a total amount of monomer components constituting the acrylic polymer.

7. The threadlike adhesive body according to claim 1 or 2, wherein

the adhesive contains a base polymer and an adhesive-imparting resin, and
the adhesive-imparting resin is contained in an amount of 1 part by mass to 100 parts by mass relative to 100 parts by mass of the base polymer.

## INTERNATIONAL SEARCH REPORT

| International application No. |
|---|
| **PCT/JP2023/040417** |

| **A.** | **CLASSIFICATION OF SUBJECT MATTER** |
|---|---|

*C09J 7/38*(2018.01)i; *C09J 11/08*(2006.01)i; *C09J 133/04*(2006.01)i
FI:   C09J7/38; C09J133/04; C09J11/08

According to International Patent Classification (IPC) or to both national classification and IPC

| **B.** | **FIELDS SEARCHED** |
|---|---|

Minimum documentation searched (classification system followed by classification symbols)

C09J1/00-5/10; C09J7/00-7/50; C09J9/00-201/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2020-19923 A (NITTO DENKO CORP) 06 February 2020 (2020-02-06)<br>claims 1, 3-4, 7-8, paragraphs [0010], [0048]-[0049], [0076], examples 4-5 | 1-7 |
| A | JP 2019-65280 A (NITTO DENKO CORP) 25 April 2019 (2019-04-25)<br>claims 1, 5, paragraphs [0021], [0027], [0055], [0073], [0088], [0106], example 1 | 1-7 |
| A | JP 2006-104298 A (TERAOKA SEISAKUSHO KK) 20 April 2006 (2006-04-20)<br>claims 1, 7, paragraph [0063], example 1 | 1-7 |
| A | WO 2022/071241 A1 (NITTO DENKO CORP) 07 April 2022 (2022-04-07)<br>claims 1, 3-4, 5, paragraphs [0001], [0046]-[0047], [0049], examples | 1-7 |
| A | WO 2022/209904 A1 (NITTO DENKO CORP) 06 October 2022 (2022-10-06)<br>claims 1, 3-7, paragraphs [0014], [0048], [0050], examples | 1-7 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/040417**

| Patent document cited in search report | | | Publication date (day/month/year) | Patent family member(s) | Publication date (day/month/year) |
|---|---|---|---|---|---|
| JP | 2020-19923 | A | 06 February 2020 | US 2021/0009864 A1<br>claims 1, 3-4.7-8, paragraphs [0013], [0066]-[0067], [0105], examples 4-5<br>EP 3757185 A1<br>CN 111742025 A<br>KR 10-2020-0123131 A | |
| JP | 2019-65280 | A | 25 April 2019 | US 2020/0308454 A1<br>claims 1, 5, paragraphs [0027], [0034], [0064], [0082], [0099], [0125], example 1<br>EP 4015593 A1<br>KR 10-2020-0060385 A<br>CN 111108163 A | |
| JP | 2006-104298 | A | 20 April 2006 | (Family: none) | |
| WO | 2022/071241 | A1 | 07 April 2022 | EP 4223851 A1<br>claims 1, 3-4, 5, paragraphs [0001], [0047]-[0048], [0050], examples<br>CN 116209731 A<br>KR 10-2023-0074736 A | |
| WO | 2022/209904 | A1 | 06 October 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020019923 A
- JP 2020076066 A
- JP 2022181325 A